# EUROPÄISCHE PATENTSCHRIFT

(11) **EP 0 809 527 B1**
(45) Veröffentlichungstag und Bekanntmachung des Hinweises auf die Patenterteilung: **02.12.1998**
(21) Anmeldenummer: 96904019.5
(22) Anmeldetag: 08.02.1996
(51) Int. Cl.: B01D 19/04, D21H 21/12

(54) **DISPERSIONEN MIT GEGEBENENFALLS VERESTERTEN (POLY)GLYCERINPOLYGLYKOLETHERN**
DISPERSIONS WITH OPTIONALLY ESTERIFIED (POLY)GLYCERINE POLYGLYCOL ETHERS
DISPERSIONS COMPORTANT DES POLYGLYCOLETHERS DE (POLY)GLYCERINE EVENTUELLEMENT ESTERIFIES

(30) Priorität: 16.02.1995 DE 19505178
(43) Veröffentlichungstag der Anmeldung: 03.12.1997
(73) Patentinhaber: Henkel Kommanditgesellschaft auf Aktien, 40191 Düsseldorf (DE)
(72) Erfinder: WOLLENWEBER, Horst-Werner, D-40597 Düsseldorf (DE); DE HAUT, Christian, F-77310 Boissise-le-Roi (FR); KNUDSEN, Egil, N-3032 Drammen (NO)
(86) Internationale Anmeldenummer: EP9600521
(87) Internationale Veröffentlichungsnummer: WO9625215

(56) Entgegenhaltungen:
- EP-A- 0 242 729
- EP-A- 0 322 830
- DE-A- 3 001 387
- DE-A- 3 423 994
- DE-A- 3 636 086

## Beschreibung

Die Erfindung betrifft wäßrige Dispersionen von Alkoholen, deren Ölphase bei Raumtemperatur feste Alkohole sowie zusätzlich bei Raumtemperatur flüssige, gegebenenfalls veresterte Glycerinpolyglykolether oder Polyglycerinpolyglykolether enthalten, als auch die Verwendung derartiger wäßriger Dispersionen als Antischaummittel.

Für eine Vielzahl technischer Prozesse stellt die mit der Anwesenheit bzw. mit dem Einsatz von grenzflächenaktiven Substanzen verbundene Schaumentwicklung ein ernsthaftes Problem dar. So tritt beispielsweise bei der Herstellung von Farben und Lacken beim Anreiben des Lacks durch Einrühren von Luft verstärkte Schaumbildung auf. Aufgrund dieser Schaumbildung gestaltet sich die Herstellung von Farben und Lacken langwieriger, da die Anlagen nur mit einem Bruchteil des zur Verfügung stehenden Volumens gefüllt und betrieben werden können. Gleichzeitig kann eine solche Schaumentwicklung aber auch auftreten, wenn der Anwender Lacke bzw. Farben auf die Untergründe auftragen will. Dabei können Luftbläschen entstehen, die nicht nur optische Oberflächenstörungen darstellen, sondern auch Schwachstellen des getrockneten Films sind, da die Bläschen leicht durch Stoßeinwirkung platzen können.

Auch in der Papierfabrikation können aufgrund des im Wasserkreislauf eingetragenen Luftgehaltes Schäume gebildet werden, die zu Störungen führen. Beispielsweise können Schaumflecken auf dem Papier auftreten, wenn Schaum bei der Blattbildung auf die Papierbahn gelangt. Durch die zunehmend schneller laufenden Maschinen steigt insgesamt die Gefahr der Untermischung von Luft in die Fasersuspension, was zu einer Störung des Entwässerungsvorgangs des Papierstoffs auf der Papiermaschine und letztendlich zu porösen Strukturen des Papierblattes führen kann. Diese prinzipiell bekannten Nachteile werden durch die neuen Papiermaschinen mit den geschlossenen Wasserkreisläufen noch verstärkt, da sich schaumbildende und schaumstabilisierende Stoffe in den geschlossenen Systemen anreichern.

Auch bei der industriellen Herstellung und/oder Verarbeitung von Nahrungsmitteln kommt der Bekämpfung von auftretendem Schaum bzw. der Verhütung von Schaum beträchtliche Bedeutung zu. So können beispielsweise bei der Verarbeitung von zuckerhaltigen Pflanzensäften (Zuckerrüben) besondere Schwierigkeiten durch übermäßige Schaumentwicklung in den Diffuseuren, in den Klärvorrichtungen sowie in den Carbonisiertanks und in den Verdampfern auftreten. Ebenso gilt es bei der Herstellung von Kartoffelfertigprodukten wie Chips, bei der Erzeugung von Backhefe unter Verwendung von Melasse oder anderen technischen Fermentationsprozessen wie die Gewinnung von Arzneimitteln, die Schaumbildung auf ein das technische Produktionsverfahren nicht beeinträchtigendes Maß herabzusetzen.

Wie die obigen Ausführungen zeigen, besteht in der Technik ein großer Bedarf sowohl an Entschäumern, die in der Lage sein sollen, entstandenen Schaum zu verringern, als auch an Schauminhibitoren, die das Entstehen von Schaum unterdrücken sollen. Des weiteren sollen Antischaummittel auch in flüssigen Systemen gelöste Luftbläschen an die Systemoberfläche treiben, ein Vorgang, der als Entgasen oder auch als Entlüften, beispielsweise bei Lacken eine große Rolle spielt. Antischaummittel sind daher im Sinne der Erfindung Mittel, die sowohl entstehenden Schaum verringern und präventiv die Schaumbildung inhibieren als auch Luftbläschen austreiben sollen. Von diesen Antischaummitteln wird erwartet, daß sie in geringen Zusatzmengen kurzfristig aber auch langanhaltend wirksam sind.

Aus der Literatur ist es bekannt, daß wäßrige Dispersionen, die in der Ölphase bei Raumtemperatur feste Alkohole enthalten, entschäumende Wirkung zeigen. So beschreibt beispielsweise die DE-A-34 23 994 wäßrige Dispersionen mit Fettalkoholen und Fettsäureestern von mehrwertlgen Alkoholen in der Ölphase als entschäumende und entlüftende Mittel für die Papier-, Nahrungsmittel-, Lack- und Bohrindustrie.

In der DE-A-41 27 719 werden als Entschäumer für die Papierindustrie O/W-Emulsionen empfohlen, deren Ölphasen neben Alkoholen mit mindestens 12 C-Atomen zwingend Polyglycerinester von C₁₂₋₃₆-Fettsäuren und einem Mindestveresterungsgrad von 20 % enthalten. Derartige O/W-Emulsionen zeigen zwar eine akzeptable Spontanwirkung als Entschäumer, aber die Langzeitwirkung ist verbesserungsbedürftig.

Aus der DE-A-30 01 387 sind wäßrige emulgatorhaltige Suspensionen von höher schmelzenden Alkoholen bekannt, die zwingend flüssige Kohlenwasserstoffe enthalten, die der fertigen Suspension zugesetzt werden, um die Viskosität besser einstellen zu können. In diesen Suspensionen können neben den höher schmelzenden Alkoholen auch Fettsäureester von ein- und mehrwertigen Alkoholen wie Di- und Polyglycerol sowie ihre Ethylen- und Propylenoxidaddukte enthalten sein, wobei diese jedoch bei Raumtemperatur eine wachsartige Konsistenz aufweisen müssen. Derartige wäßrige Alkoholdispersionen zeigen jedoch insbesondere bei höheren Temperaturen des zu entschäumenden Mediums, wie sie beispielsweise in der Papierfabrikation auftreten können, nur unzureichende Wirkung.

Aufgabe der vorliegenden Erfindung war es daher, Antischaummittel zur Verfügung zu stellen, die über einen weiten Temperaturbereich und vor allem auch bei höheren Temperaturen hohe Spontanwirkung und Langzeitwirkung schon in geringen Einsatzmengen zeigen.

Überraschenderweise ist dies gelungen durch Einsatz von wäßrigen Dispersionen, die neben den bei Raumtemperatur festen Alkoholen zusätzlich bei Raumtemperatur flüssige Polyglycerinpolyglykolether oder Glycerinpolyglykolether enthalten, wobei diese verestert sein können.

Ein Gegenstand der vorliegenden Erfindung sind daher wäßrige Dispersionen enthaltend
a) eine in Wasser dispergierte Ölphase, die zu 5 bis 50 Gew.-% am Aufbau der Dispersion beteiligt ist, und bei Raumtemperatur feste Alkohole sowie bei Raumtemperatur flüssige gegebenenfalls veresterte Glycerinpolyglykolether oder Polyglycerinpolyglykolether enthält, und
b) grenzflächenaktive Verbindungen und
c) Wasser.

In der vorliegenden Beschreibung findet sich auch die verkürzte Schreibweise "(Poly)Glycerinpolyglykolether" für "Polyglycerinpolyglykolether oder Glycerinpolyglykolether".

Die erfindungsgemäßen wäßrigen Dispersionen sind vom Öl-in-Wasser-Typ, d.h. sie enthalten eine im Wasser dispergierte Ölphase neben der Wasserphase. Zur Stabilisierung der Dispersionen sind zusätzlich grenzflächenaktive Verbindungen enthalten.

Der Begriff "Dispersion" trägt dem Sachverhält Rechnung, daß in der Ölphase bei Raumtemperatur feste Alkohole enthalten sind, die in Wasser dispergiert werden. Wie bereits dargelegt, enthalten die erfindungsgemäßen Dispersionen in der Ölphase auch die bei Raumtemperatur flüssigen gegebenenfalls veresterten (Poly)Glycerinpolyglykolether, die naturgemäß in Wasser emulgiert werden. Raumtemperatur bedeutet im vorliegenden Zusammenhang Temperaturen im Bereich von 15 bis 25 °C.

Die bei Raumtemperatur festen Alkohole können natürlichen oder synthetischen Ursprungs sein, wobei letztere nach dem Ziegler-Verfahren durch Oxidation von Aluminiumalkylen oder durch die Oxosynthese erhalten werden können. Geeignete synthetische Alkohole sind auch die Destillationsrückstände, die bei der Herstellung der vorstehend genannten synthetischen Alkohole durch Oxosynthese oder nach dem Ziegler-Verfahren erhalten werden. Bei der Oxosynthese fallen in aller Regel Produktgemische an, die hauptsächlich Alkohole enthalten. Bevorzugte synthetische Alkohle sind die genannten Destillationsrückstände nach der Oxosynthese.

Als natürliche Alkohole eignen sich besonders solche, die gesättigt und geradkettig sind und 12 bis 28 C-Atome haben. Beispiele hierfür sind Palmityl-, Stearyl-, Arachidyl,- Behenyl-, Lignoceryl- und Cerylalkohol. Die natürlichen Alkohole können, wie in der Fettchemie üblich, auch in Form technischer Schnitte eingesetzt werden, wie sie aus Rüböl, Erdnußöl, Rizinusöl, Rindertalg oder Fischöl durch Hydrierung erhalten werden. Von den natürlichen Fettalkoholen werden besonders bevorzugt solche mit 16 bis 22 C-Atomen und insbesondere Mischungen davon mit einem Anteil von 20 bis 70 Gew.-% - bezogen auf Fettalkohol - an Stearylalkohol.

Geeignet im Sinne der Erfindung als feste Alkohole sind auch Mischungen von Destillationsrückständen nach der Oxosynthese und gesättigten Fettalkoholen mit 12 bis 28 C-Atomen.

Im Rahmen der Erfindung werden wäßrige Dispersionen ganz besonders bevorzugt, deren bei Raumtemperatur feste Alkohole einen Schmelzpunkt über 40 °C, insbesondere über 50 °C aufweisen.

Als weitere zwingende Komponente der Ölphase der erfindungsgemäßen wäßrigen Dispersionen sind bei Raumtemperatur flüssige Glycerinpolyglykolether oder Polyglycerinpolyglykolether enthalten, die gegebenenfalls verestert sind.

Fettsäureester der Polyglycerinpolyglykolether sind aus der DE-A-36 36 086 bekannt. Sie sind durch Alkoxylierung der Polyglycerine und anschließender Veresterung mit Fettsäuren auf an sich bekannte Weise herstellbar. Im Rahmen der Erfindung sind bevorzugt solche Fettsäureester von Glycerinpolyglykolethern oder von Polyglycerinpolyglykolethern in den Dispersionen enthalten, die herstellbar sind durch Umsetzung von Glycerin oder Polyglycerinen mit 2 bis 15 Mol Ethylenoxid und 10 bis 60 Mol Propylenoxid - pro Mol im Glycerin oder Polyglycerin vorhandener Hydroxylgruppen - und anschließender Veresterung mit 0,25 bis 2 Mol Fettsäure - pro Mol im Glycerin oder Polyglycerin vorhandender Hydroxylgruppen. Innerhalb dieser Gruppe werden bevorzugt Fettsäureester von Glycerinpolyglykolethern oder Polyglycerinpolyglykolethern, die herstellbar sind durch Umsetzung von Glycerin oder von Polyglycerinen mit 3 bis 10 Mol Ethylenoxid und 15 bis 30 Mol Propylenoxid - pro Mol im Glycerin oder Polyglycerin vorhandener Hydroxylgruppen - und anschließender Veresterung.

Als Polyglycerine sind vorzugsweise Diglycerin, Triglycerin sowie lineares oder verzweigtes Tetraglycerin als auch technische Polyglyceringemische, wie sie durch Kondensation von Glycerin bei erhöhter Temperatur und vermindertem Druck in Gegenwart alkalischer Katalysatoren unter Luftabschluß und anschließender Entfernung des Katalysators mit Hilfe von Ionenaustauscher hergestellt werden können, geeignet. Bei den technischen Polyglyceringemischen sind neben einem gewissen Anteil an nichtkondensiertem Glycerin praktisch alle Oligomeren bis zu dem über die Reaktionsbedingungen eingestellten durchschnittlichen Polymerisationsgrad vertreten. Bevorzugte Polyglycerine sind im Sinne der Erfindung solche, die die Glycerinoligomeren vom Diglycerin bis zum Heptaglycerin und daneben bis zu 20 Gew.-% monomeres Glycerin enthalten und vorzugsweise Hydroxylzahlen im Bereich von 900 bis 1.200 aufweisen.

Die Alkoxylierung des Glycerins oder Polyglycerins kann gleichzeitig mit den vorgesehenen Mengen an Ethylenoxid und Propylenoxid (Random-Polymerisation) oder erst mit einem und dann mit dem anderen Alkylenoxid (Blockpolymerisation) in an und für sich bekannter Weise, beispielsweise gemäß DE-A-36 36 086, erfolgen.

Soll eine Veresterung vorgenommen werden, werden die so erhaltenen Glycerinpolyglykolether oder Polyglycerinpolyglykolether anschließend auf an sich bekannte Weise mit Fettsäuren in den angegebenen Mengen umgesetzt. Sofern man unterstöchiometrische Mengen an Fettsäuren - bezogen auf 1 Mol vorhandener Hydroxylgruppen im Glycerin oder Polyglycerin - einsetzt, werden Partialester erhalten. Wünscht man vollständig veresterte Glycerinpolyglykolether oder Polyglycerinpolyglykolether empfiehlt es sich, mit einem stöchiometrischen Überschuß von 1,1 bis 2 Mol Fettsäure pro Mol im Glycerin oder Polyglycerin vorhandener Hydroxylgruppen zu arbeiten.

Im Sinne der Erfindung können sowohl unveresterte Glycerinpolyglykolether oder Polyglycerinpolyglykolether, hergestellt in Anlehnung an DE-A-36 36 086 durch Umsetzung des Glycerins oder Polyglycerins mit 2 bis 15 Mol Ethylenoxid und 10 bis 60 Mol Propylenoxid - pro Mol im Glycerin oder Polyglycerin vorhandener Hydroxylgruppen - als auch die Fettsäureester der beschriebenen Glycerinpolyglykolether oder Polyglycerinpolyglykolether enthalten sein.

Als Fettsäuren zur Veresterung der Glycerinpolyglykolether oder Polyglycerinpolyglykolether empfehlen sich solche mit 8 bis 22 C-Atomen wie Capryl-, Caprin-, Laurin-, Myristin-, Palmitin-, Stearin-, Arachidin-, Behen-, Öl-, Eruca-, Linol-, Linolen-, Ethylhexan-, Isopalmitin- und Isostearinsäure. Bevorzugt werden technische Mischungen der Fettsäuren wie sie bei der großtechnischen Spaltung von natürlich vorkommenden Ölen und Fetten wie Kokos- und Palmkernöl oder bei der Aufarbeitung von Rindertalg anfallen.

Besonders bevorzugt werden im Sinne der Erfindung die flüssigen Fettsäureester der (Poly)Glycerinpolyglykolether der vorher beschriebenen Art.

Die erfindungsgemäßen Dispersionen enthalten die in Wasser dispergierte Ölphase, die zu 5 bis 50 Gew.-%, vorzugsweise 15 bis 35 Gew.-%, am Aufbau der Dispersion beteiligt ist. Die Ölphase wiederum enthält die bei Raumtemperatur festen Alkohole in Mengen von 20 bis 80 Gew.-%, vorzugsweise 35 bis 60 Gew.-%, und in Mengen von 20 bis 80 Gew.-%, vorzugsweise 40 bis 65 Gew.-%, die gegebenenfalls veresterten flüssigen Glycerinpolyglykolether oder Polyglycerinpolyglykolether.

Zusätzlich kann die Ölphase in Mengen von 0,5 bis 10 Gew.-% - bezogen auf Ölphase - im Austausch der entsprechenden Mengen der an bei Raumtemperatur festen Alkohole - natürliche und/oder synthetische Wachse, aliphatische C₁₄₋₂₈-Fettsäuren und/oder Alkalimetall- oder Aminseifen von aliphatischen C₁₄₋₂₈-Fettsäuren enthalten. Natürliche Wachse sind im Sinne der Erfindung sowohl solche, die bei der Verarbeitung von Erdöl, Bitumen und/oder Fossilien erhältlich sind, beispielsweise die Paraffinwachse und Montanwachse als auch die natürlichen Ester, Ketone oder Amide von natürlichen C₁₆₋₃₂-Fettsäuren oder von natürlichen C₁₆₋₃₂-Fettalkoholen wie Stearylstearat, Stearylbehenat, Behenylbehenat, Stearon, Glycerintristearat, Glycerintribehenat, Pentaerythrittetrastearat, gehärtetes Ricinusöl, Ethylenbisstearamid, Eurcasäureamid, Carnaubawachs, Bienenwachs usw. Besonders bevorzugt im Sinne der Erfindung werden die natürlichen Wachse und insbesondere die an und für sich üblichen Paraffinwachse mit Schmelzpunkten nach DIN 51570 über 50 °C.

Als weitere Komponente enthalten die erfindungsgemäßen Dispersionen grenzflächenaktive Verbindungen, um die bei Raumtemperatur festen Alkohole in der Wasserphase zu dispergieren und die flüssigen gegebenenfalls veresterten (Poly)Glycerinpolyglykolether zu emulgieren.

Besonders bevorzugt werden Mischungen aus anionischen grenzflächenaktiven und nichtionischen grenzflächenaktiven Verbindungen. Als nicht-ionische grenzflächenaktive Verbindungen eignen sich solche mit einem HLB-Wert über 6. Als anionische grenzflächenaktive Verbindungen eignen sich solche ausgewählt aus der von Alkoholsulfate, ethoxylierte Alkoholsulfate, Fettalkoholethersulfosuccinate und Fettalkoholetherphosphate gebildeten Gruppe. Besonders bevorzugt als anionische grenzflächenaktive Verbindungen werden C₈₋₁₈-Fettalkoholethersulfate mit 6 bis 100 Mol Ethylenoxid, vorzugsweise mit 20 bis 60 Mol Ethylenoxid. Geeignete Beispiele hierfür sind Natriumlaurylethersulfat ethoxyliert mit 30 Mol Ethylenoxid und Natriumlaurylethersulfat ethoxyliert mit 50 Mol Ethylenoxid.

Des weiteren wurde im Rahmen der Erfindung gefunden, daß besonders lagerstabile erfindungsgemäße Dispersionen erhalten werden, wenn als nichtionische grenzflächenaktive Verbindungen Umsetzungsprodukte von Ethylenoxid mit 1,2-Alkandiolen mit 6 bis 18 C-Atomen eingesetzt werden. So können nach einer bevorzugten Ausführungsform der vorliegenden Erfindung Dispersionen sogar mit hohen Gehalten an natürlichen Fettalkoholen lange gelagert oder auch unter 15 °C gelagert werden, ohne daß es zu nennenswerten Gelbbildungen oder Aufrahmungen kommt, wenn als nichtionische grenzflächenaktive Verbindungen die genannten Umsetzungsprodukte eingesetzt werden.

Bevorzugt werden als nichtionische grenzflächenaktive Verbindungen solche der allgemeinen Formel (I) 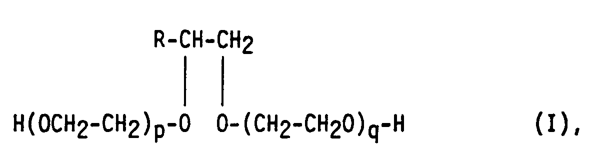 in der R einen Alkylrest mit 6 bis 18 C-Atomen und p und q unabhängig voneinander eine Zahl von 0 bis 50 bedeutet, wobei die Summe von p und q im Bereich von 5 bis 50 liegt.

Verbindungen der allgemeinen Formel (I) sind als Umsetzungsprodukte von Ethylenoxid mit aliphatischen vicinalen endständigen Alkandiolen bereits bekannt. In der deutschen Offenlegungsschrift DE-A- 40 06 391 werden Tensidmischungen als Emulgatoren für die Emulsionspolymerisation beschrieben, die neben ethoxylierten Alkoholen auch Umsetzungsprodukte von Ethylenoxid mit 1,2-Alkandiolen enthalten. Bei der Emulsionspolymerisation werden derartige Tensidmischungen zunächst für die Emulgierung der flüssigen Monomere und später für deren Polymerisate benötigt. Bei der vorliegenden Erfindung werden die nichtionischen grenzflächenaktiven Verbindungen vorzugsweise mit anionischen grenzflächenaktiven Verbindungen abgemischt, um die in Wasser unlöslichen Fettalkohole dispergieren zu können. Des weiteren ist in der DE-A-40 06 391 kein Hinweis auf verbesserte Lagerstabilität zu finden.

Die Herstellung der Umsetzungsprodukte von Ethylenoxid mit 1,2 Alkandiolen kann wie in der DE-A-40 06 391 beschrieben erfolgen. Weitere Aufschlüsse gibt die deutsche Patentschrift DE-B-11 90 927, die die Umsetzung von 1,2-Diolen mit 8 bis 26 C-Atomen mit Ethylenoxid beschreibt, sowie die deutsche Offenlegungsschrift DE-A-29 00 030, die ein Verfahren zur Ringöffnung innenständiger oder endständiger Olefinepoxide, die 6 bis 18 C-Atome enthalten, mit mehrfunktionellen Alkoholen wie Ethylenglykol und nachfolgender Ethoxylierung der Reaktionsprodukte, offenbart.

Im Rahmen der Erfindung werden Umsetzungsprodukte von Ethylenoxid mit gesättigten oder ungesättigten 1,2-Alkandiolen mit 6 bis 18 C-Atomen als Verbindungen der allgemeinen Formel (I) eingesetzt. Bevorzugt im Rahmen der Erfindung werden als Verbindungen der allgemeinen Formel (I) Anlagerungsprodukte von Ethylenoxid an lineare 1,2-Alkandiole mit gerader oder ungerader Kohlenstoffzahl oder deren Mischungen. Ganz besonders geeignet sind ethoxylierte 1,2-Alkandiole mit 12 und/oder 14 C-Atomen. Die Herstellung solcher ethoxylierten 1,2-Alkandiole erfolgt in bekannter Weise aus Olefinen und Olefingemischen mit endständigen Doppelbindungen durch Epoxidation und anschließender katalytischer Ringöffnung der resultierenden endständigen Epoxyalkane mit Ethylenglykol. Die Ringöffnungen der 1,2-Epoxyalkane mit Ethylenglykol kann sauer oder basisch katalysiert werden. Bei der sauren Katalyse entstehen etwa zur Hälfte 1-Hydroxy-2-(2-hydroxyethoxy)-2-alkane, die zwei primäre Hydroxylgruppen aufweisen und zur anderen Hälfte entstehen dabei 1-(2-Hydroxyethoxy-)-2-hydroxyalkane, die eine primäre und eine sekundäre Hydroxylgruppe aufweisen. Bei den Verbindungen, die zwei primäre Hydroxylgruppen aufweisen, können diese in praktisch gleicher Weise mit Ethylenoxid weiterreagieren. Die Verbindungen, die eine primäre und eine sekundäre Hydroxylgruppe aufweisen, zeigen eine bevorzugte Weiterreaktion mit Ethylenoxid an der primären Hydroxylgruppe. Weiterhin ist es möglich, die Ringöffnung der 1,2-Epoxyalkane mit einem Überschuß an Ethylenglykol basisch zu katalysieren. Dabei entstehen im wesentlichen 1-(2-Hydroxyethoxy-)-2-hydroxyalkane. Im Rahmen der Erfindung werden Verbindungen der allgemeinen Formel (I) bevorzugt, die durch sauer katalysierte Ringöffnung von endständigen Epoxyalkanen mit Ethylenglykol und anschließender Epoxydierung hergestellt worden sind.

Durch Ethoxylierung werden die 1,2-Alkandiole in die Verbindungen der allgemeinen Formel (I) überführt. Die Ethoxylierung kann nach aus dem Stand der Technik bekannten Verfahren erfolgen, die je nach Wahl der Alkoxylierungskatalysatoren zu Produkten mit enger oder mit breiter Homologenverteilung führen. Die Wahl des Alkoxylierungskatalysators beeinflußt dabei die Breite des Spektrums von Anlagerungsprodukten, die sogenannte Homologenverteilung, des Ethylenoxids an die 1,2-Alkandiole. So werden in Gegenwart der katalytisch wirkenden Alkalimetallalkoholate wie Natriummethylat Anlagerungsprodukte mit breiter Homologenverteilung erhalten, während beispielsweise in Gegenwart von Hydrotalcit als Katalysator stark eingeengte Homologenverteilung erfolgt.

Im Rahmen der Erfindung werden Verbindungen der allgemeinen Formel (I) eingesetzt, die durch Umsetzung von aliphatischen 1,2-Alkandiolen mit bis zu 49 mol Ethylenoxid pro mol Alkandiol erhalten werden, wobei die beiden Hydroxylgruppen der 1,2-Alkandiole durchaus unterschiedliche Mengen an Ethylenoxid angelagert haben können. Damit können p und q unabhängig voneinander eine Zahl zwischen 0 bis 50 bedeuten, wobei jedoch gegeben sein muß, daß die Summe von p und q im Bereich von 5 bis 50, vorzugsweise im Bereich von 5 bis 30 liegt. Bei den Indices p und q ist zu beachten, daß dies nicht den gesamten Ethoxylierungsgrad darstellt, da das zur Ringöffnung eingesetzte Ethylenglykol mit zu berücksichtigen ist.

Die erfindungsgemäßen wäßrigen Dispersionen enthalten die nichtionischen grenzflächenaktiven Verbindungen vorzugsweise in Mengen von 0,5 bis 5 Gew.-% und die anionischen grenzflächenaktiven Verbindungen auch vorzugsweise in Mengen von 0,5 bis 5 Gew.-%.

Somit ergeben sich bevorzugte wäßrige Dispersionen, die in der Ölphase in Mengen von 5 bis 50 Gew.-%, vorzugsweise 15 bis 35 Gew.-% bei Raumtemperatur feste Alkohole und bei Raumtemperatur flüssige gegebenenfalls veresterte Glycerinpolyglykolether oder Polyglycerinpolyglykolether, gegebenenfalls in Mischung mit natürlichen und/oder synthetischen Wachsen, aliphatische C₁₄-C₂₈-Fettsäuren und/oder Alkalimetall- oder Aminseifen von aliphatischen C₁₄-C₂₈-Fettsäuren,
0,5 bis 5 Gew.-% anionische grenzflächenaktive Verbindungen,
0,5 bis 5 Gew.-% nichtionische grenzflächenaktive Verbindungen,
0 bis 20 % übliche Zusatzstoffe und
   der zu 100 Gew.-% fehlende Rest Wasser enthalten.

Übliche Zusatzstoffe sind Schutzkolloide, andere Stabilisatoren oder flüssige Fettalkohole, Fettsäuren, Fette, Öle und Silikonöle, um die Konsistenz der dispergierten Phase zu verbessern, ohne die Wirkung negativ zu beeinträchtigen.

Die erfindungsgemäßen wäßrigen Dispersionen können auf an und für sich bekannte Art und Weise hergestellt werden. So ist es möglich, den bei Raumtemperatur festen Alkohol in Mischung mit den flüssigen gegebenenfalls veresterten (Poly)Glycerinpolyglykolether in eine Schmelze zu überführen und diese in das mit den grenzflächenaktiven Verbindungen versetzte Wasser einzurühren, wobei durch Abkühlung der Schmelze die Dispersionen entstehen. Man kann aber auch die bei Raumtemperatur festen Alkohole in Mischung mit den flüssigen gegebenenfalls veresterten (Poly)Glycerinpolyglykolether in gegebenenfalls erwärmtes Wasser einrühren und das Wasser auf solche Temperaturen führen, bis eine Schmelze entsteht. Falls besonders feinteilige Dispersionen gewünscht werden, kann dies beispielsweise gemäß der DE-A-30 01 387 bei Abkühlung der Schmelze durch Einsatz eines hochscherenden Disolvers, gegebenenfalls unter Zusatz von bei Raumtemperatur flüssigen Kohlenwasserstoffen, oder beispielsweise gemäß der EP-B-399 266 durch Honmogenisierung einer Voremulsion und anschließender Abkühlung erreicht werden.

Die erfindungsgemäßen wäßrigen Dispersionen sind für viele Anwendungszwecke geeignet, da sie gut dosiert werden können und lagerstabil sind. Des weiteren sind sie in der Lage, Schaum zu unterdrücken bzw. zu regulieren. Daher betrifft eine weitere Ausführungsform der vorliegenden Erfindung die Verwendung der oben beschriebenen wäßrigen Dispersionen als Antischaummittel. Besonders bevorzugt werden die wäßrigen Dispersionen in der Papierindustrie in wäßrigen Systemen verwendet, deren Temperaturen mindestens 35°C betragen, beispielsweise in der Sulfitzellstoffkochung, sowie in der Papierbeschichtung. Bei der Papierherstellung können sie bei der Mahlung und Dispergierung von Papierstoffen und Pigmenten verwendet werden. Selbstverständlich ist es aber auch möglich, die beschriebenen wäßrigen Dispersionen überall dort einzusetzen, wo Schäume auftreten bzw. verhindert werden sollen, so in der Nahrungsmittelindustrie, der Bauindustrie, der Stärkeindustrie, im Abwasserbereich, insbesondere in Kläranlagen als auch in Lacken und Farben.

### Beispiele

### A) Dispersionen

### A1)

Es wurde eine wäßrige Dispersion hergestellt aus
- 90 g: Destillationsrückstand aus Oxosynthese (Handelsname Nafol^{R} 20+)
- 120 g: eines mit 5 Mol Ethlyenoxid (EO) und 22 Mol Propylenoxid (PO) alkoxyliertes Glycerin, vollständig verestert mit 1 Mol Kokosfettsäure - EO/PO
und Fettsäure berechnet pro Mol OH-Gruppe des Glycerins -
- 12 g: Emulgatorkombination aus 8 g Ethylenglykol ringgeöffnetes C_{12/14}-Alkanepoxid, das nachträglich mit 10 Mol EO ethoxyliert wurde (siehe DE 44 21 270) und 4 g Natriumlaurylethersulfat, ethoxyliert mit 30 Mol EO
sowie 778 g Wasser.

### A2)

Analog A1) wurde eine wäßrige Dispersion hergestellt aus
- 90 g: Nafol^{R} 20+
- 120 g: alkoxylierter Polyglycerinölsäureester analog Beispiel I der DE-A-36 36 086
- 12 g: Emulgatorkombination aus A1) sowie
- 778 g: Wasser.

### Vergleichsdispersionen

Als Vergleich wurden wäßrige, emulgatorhaltige Dispersionen gemäß A1) und A2) hergestellt, jedoch ohne die alkoxylierten und veresterten (Poly) Glycerine, sondern mit
- V1: 210 g Nafol^{R} 20+
- V2: 90 g Nafol^{R} 20+
120 g Polyglycerinisostearat der Fa. Solvay TUE 2260^{R} mit hohem Anteil an Tetraglycerin und ca. 20 %iger Veresterung mit Isostearinsäure

### Vergleichssubstanz

Zum weiteren Vergleich V3 wurde das reine alkoxylierte Polyglycerin, verestert mit Ölsäure aus A2) nach Beispiel I der DE-A-36 36 086 getestet.

### B) Anwendung als Antischaummittel

Die nach den Beispielen A1) und A2) sowie die nach den Vergleichsbeispielen V1 und V2 hergestellten Dispersionen wurden in Mengen von 600 µl zu einem Liter einer 10 vol %igen wäßrigen Zuckerrübensirup-Lösung, die auf 45 °C erwärmt worden war, gegeben. Die Vergleichssubstanz V3 wurde in Mengen von 200 µl zu einem Liter der gleichen erwärmten Zuckerrübensirup-Lösung gegeben. Die Lösung wurde in einer Glasapparatur laufend mit 1000 UpM gerührt, wobei 600 l Luft pro Stunde eingetragen wurden. Bestimmt wurde die Schaumhöhe in Liter, die nach verschiedener Versuchsdauer erreicht wurde. Die Antischaummittel sind um so besser, je niedriger die Schaumhöhe ist. Sofern durch Zugabe des Antischaummittels in kurzer Zeit (bis 60 Sekunden) eine Erniedrigung des Schaumvolumens auftrat, liegt eine Spontanwirkung vor. Steigt nach längerer Zeit das Schaumvolumen nicht bzw. nur kaum an, ist eine Langzeitwirkung des Antischaummittels gegeben. Die Ergebnisse sind in Tabelle 1 zusammengefaßt.

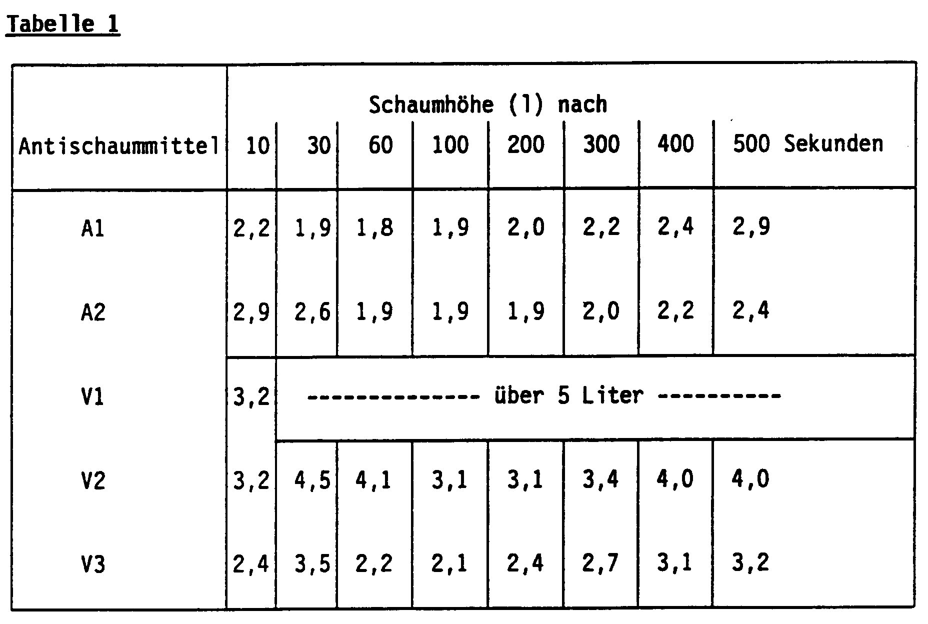

Tabelle 1 zeigt, daß die erfindungsgemäßen Dispersionen sowohl in der Spontan- als auch in der Langzeitwirkung besser sind als Dispersionen nur mit Alkoholen (V1) oder mit Alkoholen und Polyglycerinpartialester, die nicht alkoxyliert sind (V2). V1 war ausgesprochen schlecht. Außerdem sind die erfindungsgemäßen Dispersionen mit dem Gehalt an alkoxylierten Polyglycerinpartialester auch besser als der reine alkoxylierte Polyglycerinpartialester (V3), so daß ein klarer Synergieeffekt für die erfindungsgemäßen Dispersionen vorliegt.

## Patentansprüche

1. Wäßrige Dispersionen enthaltend
a) eine in Wasser dispergierte Ölphase, die zu 5 bis 50 Gew.-% am Aufbau der Dispersion beteiligt ist, und bei Raumtemperatur feste Alkohole sowie bei Raumtemperatur flüssige gegebenenfalls veresterte Glycerinpolyglykolether oder Polyglycerinpolyglykolether enthält, und
b) grenzflächenaktive Verbindungen und
c) Wasser.

2. Wäßrige Dispersionen nach Anspruch 1, dadurch gekennzeichnet, daß sie bei Raumtemperatur feste Alkohole enthalten, die einen Schmelzpunkt über 40 °C haben.

3. Wäßrige Dispersionen nach Anspruch 1 oder 2, dadurch gekennzeichnet, daß sie als bei Raumtemperatur feste Alkohole Destillationsrückstände nach der Oxosynthese und/oder gesättigte Fettalkohole mit 12 bis 28 C-Atomen enthalten.

4. Wäßrige Dispersionen nach Anspruch 1, dadurch gekennzeichnet, daß sie als bei Raumtemperatur flüssige Glycerinpolyglykolether oder Polyglycerinpolyglykolether enthalten, die herstellbar sind durch Umsetzung von Glycerin oder Polyglycerinen mit 2 bis 15 Mol Ethylenoxid und 10 bis 60 Mol Propylenoxid - pro Mol im Glycerin oder Polyglycerin vorhandener Hydroxylgruppen.

5. Wäßrige Dispersionen nach Anspruch 1, dadurch gekennzeichnet, daß sie als bei Raumtemperatur flüssige Fettsäureester von Glycerinpolyglykolethern oder von Polyglycerinpolyglykolethern enthalten, die herstellbar sind durch Umsetzung von Glycerin oder Polyglycerinen mit 2 bis 15 Mol Ethylenoxid und 10 bis 60 Mol Propylenoxid - pro Mol im Glycerin oder Polyglycerin vorhandener Hydroxylgruppen - und anschließender Veresterung mit 0,25 bis 2 Mol Fettsäure - pro Mol im Glycerin oder Polyglycerin vorhandener Hydroxylgruppen.

6. Wäßrige Dispersionen nach Anspruch 5, dadurch gekennzeichnet, daß sie Fettsäureester von Glycerinpolyglykolethern oder von Polyglycerinpolyglykolethern enthalten, die herstellbar sind durch Umsetzung von Glycerin oder von Polyglycerinen mit 3 bis 10 Mol Ethylenoxid und 15 bis 30 Mol Propylenoxid - pro Mol im Glycerin oder Polyglycerin vorhandener Hydroxylgruppen - und anschließender Veresterung.

7. Wäßrige Dispersionen nach Anspruch 5 oder 6, dadurch gekennzeichnet, daß sie Fettsäureester von Glycerinpolyglykolethern oder von Polyglycerinpolyglykolethern enthalten, die herstellbar sind durch anschließende Veresterung der Glycerinpolyglykolether oder Polyglycerinpolyglykolether mit C₈₋₂₂-Fettsäuren.

8. Wäßrige Dispersionen nach Anspruch 1, dadurch gekennzeichnet, daß sie eine Mischung aus anionischen grenzflächenaktiven Verbindungen und nichtionischen grenzflächenaktiven Verbindungen enthalten.

9. Wäßrige Dispersionen nach Anspruch 8, dadurch gekennzeichnet, daß sie als nichtionische grenzflächenaktive Verbindungen Umsetzungsprodukte von Ethylenoxid mit 1,2-Alkandiolen mit 6 bis 18 C-Atomen enthalten.

10. Wäßrige Dispersionen nach Anspruch 8 oder 9, dadurch gekennzeichnet, daß sie als nichtionische grenzflächenaktive Verbindungen solche der allgemeinen Formel (I) 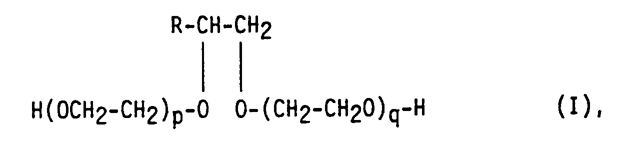 in der
R einen Alkylrest mit 6 bis 18 C-Atomen und
p, q unabhängig voneinander eine Zahl von 0 bis 50 bedeuten, wobei die Summe von p und q im Bereich von 5 bis 50 liegt,
enthalten.

11. Verwendung der wäßrigen Dispersionen nach Anspruch 1 als Antischaummittel.

## Claims

1. Aqueous dispersions containing
a) an oil phase dispersed in water of which 5 to 50% by weight is involved in the formation of the dispersion and which contains alcohols solid at room temperature and optionally esterified glycerol polyglycol ethers or polyglycerol polyglycol ethers liquid at room temperature,
b) surface-active compounds and
c) water.

2. Aqueous dispersions as claimed in claim 1, characterized in that they contain alcohols solid at room temperature with a melting point above 40°C.

3. Aqueous dispersions as claimed in claim 1 or 2, characterized in that they contain oxosynthesis distillation residues and/or saturated fatty alcohols containing 12 to 28 carbon atoms as the alcohols solid at room temperature.

4. Aqueous dispersions as claimed in claim 1, characterized in that they contain as the glycerol polyglycol ethers or polyglycerol polyglycol ethers liquid at room temperature those which are obtainable by reaction of glycerol or polyglycerols with 2 to 15 moles of ethylene oxide and 10 to 60 moles of propylene oxide per mole of hydroxyl groups present in the glycerol or polyglycerol.

5. Aqueous dispersions as claimed in claim 1, characterized in that they contain as the fatty acid esters of glycerol polyglycol ethers or polyglycerol polyglycol ethers liquid at room temperature those which are obtainable by reaction of glycerol or polyglycerols with 2 to 15 moles of ethylene oxide and 10 to 60 moles of propylene oxide (per mole of hydroxyl groups present in the glycerol or polyglycerol) and subsequent esterification with 0.25 to 2 moles of fatty acid (per mole of hydroxyl groups present in the glycerol or polyglycerol.

6. Aqueous dispersions as claimed in claim 5, characterized in that they contain fatty acid esters of glycerol polyglycol ethers or of polyglycerol polyglycol ethers which are obtainable by reaction of glycerol or polyglycerols with 3 to 10 moles of ethylene oxide and 15 to 30 moles of propylene oxide (per mole of hydroxyl groups present in the glycerol or polyglycerol) and subsequent esterification.

7. Aqueous dispersions as claimed in claim 5 or 6, characterized in that they contain fatty acid esters of glycerol polyglycol ethers or polyglycerol polyglycol ethers which are obtainable by subsequent esterification of the glycerol polyglycol ethers or polyglycerol polyglycol ethers with C₈₋₂₂ fatty acids.

8. Aqueous dispersions as claimed in claim 1, characterized in that they contain a mixture of anionic surface-active compounds and nonionic surface-active compounds.

9. Aqueous dispersions as claimed in claim 8, characterized in that they contain reaction products of ethylene oxide with alkane-1,2-diols containing 6 to 18 carbon atoms as the nonionic surface-active compounds.

10. Aqueous dispersions as claimed in claim 8 or 9, characterized in that they contain compounds corresponding to general formula (I): 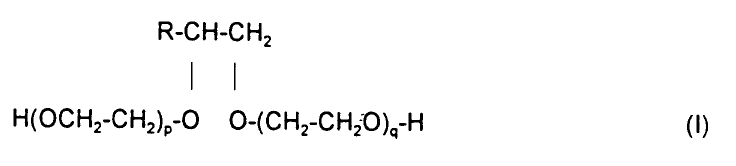 in which R is an alkyl group containing 6 to 18 carbon atoms and p and q independently of one another are numbers of 0 to 50, the sum of p and q being a number of 5 to 50,
as the nonionic surface-active compounds.

11. The use of the aqueous dispersions claimed in claim 1 as antifoam agents.

## Revendications

1. Dispersions aqueuses renfermant
a) Une phase huileuse dispersée dans l'eau, qui rentre à raison de 5 à 50 % en poids dans la constitution de la dispersion et qui renferme des alcools solides à température ambiante ainsi que des polyglycoléthers de glycérine ou de polyglycérine liquides à température ambiante, éventuellement estérifiés, et
b) des composés tensioactifs et
c) de l'eau.

2. Dispersions aqueuses selon la revendication 1, caractérisées en ce qu'elles renferment des alcools solides à température ambiante, qui présentent un point de fusion supérieur à 40 °C.

3. Dispersions aqueuses selon la revendication 1 ou 2, caractérisées en ce qu'elles renferment comme alcools solides à température ambiante, des résidus de distillation après l'oxosynthèse et/ou des alcools gras saturés comportant 12 à 28 atomes de C.

4. Dispersions aqueuses selon la revendication 1, caractérisées en ce qu'elles renferment des polyglycoléthers de glycérine ou de polyglycérine liquides à température ambiante, qui sont obtenables par mise en réaction de glycérine ou de polyglycérines avec 2 à 15 moles d'oxyde d'éthyléne et 10 à 60 moles d'oxyde de propylène (par mole de groupes hydroxyle présents dans la glycérine ou dans la polyglycérine).

5. Dispersions aqueuses selon la revendication 1, caractérisées en ce qu'elles renferment des esters d'acides gras de polyglycoléthers de glycérine ou de polyglycérine liquides à température ambiante, qui sont obtenables par mise en réaction de glycérine ou de polyglycérines avec 2 à 15 moles d'oxyde d'éthylène et 10 à 60 moles d'oxyde de propylène (par mole de groupes hydroxyle présents dans la glycérine ou dans la polyglycérine), suivie d'estérification avec 0,25 à 2 moles d'acide gras (par mole de groupes hydroxyle présents dans la glycérine ou dans la polyglycérine).

6. Dispersions aqueuses selon la revendication 5, caractérisées en ce qu'elles renferment des esters d'acides gras de polyglycoléthers de glycérine ou de polyglycérine, qui sont obtenables par mise en réaction de glycérine ou de polyglycérines avec 3 à 10 moles d'oxyde d'éthylène et 15 à 30 moles d'oxyde de propylène (par mole de groupes hydroxyle présents dans la glycérine ou dans la polyglycérine), suivie d'estérification.

7. Dispersions aqueuses selon la revendication 5 ou 6, caractérisées en ce qu'elles renferment des esters d'acides gras de polyglycoléthers de glycérine ou de polyglycérine, qui sont obtenables par estérification postérieure des polyglycoléthers de glycérine ou de polyglycérine avec des acides gras en C₈₋₂₂.

8. Dispersions aqueuses selon la revendication 1, caractérisées en ce qu'elles renferment un mélange de composés tensioactifs anioniques et de composés surfactifs non ioniques.

9. Dispersions aqueuses selon la revendication 8, caractérisées en ce qu'elles renferment comme composés surfactifs non ioniques, des produits de réaction d'oxyde d'éthylène avec des 1,2-alcanediols comportant 6 à 18 atomes de C.

10. Dispersions aqueuses selon la revendication 8 ou 9, caractérisées en ce qu'elles renferment comme composés surfactifs non ioniques, ceux de la formule générale (I) 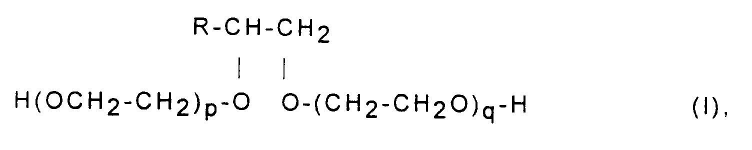 dans laquelle R représente un radical alkyle comportant 6 à 18 atomes de C et p et q correspondent indépendamment l'un de l'autre à un nombre de 0 à 50, la somme de p et de q étant comprise dans l'intervalle de 5 à 50.

11. Utilisation comme agent antimousse des dispersions aqueuses selon la revendication 1.
